# EUROPEAN PATENT APPLICATION

(11) **EP 3 878 330 A1**
(43) Date of publication of application: **15.09.2021**
(21) Application number: 20163016.7
(22) Date of filing: 13.03.2020
(51) Int. Cl.: A47J 43/07

(54) **LID FOR A BOWL OF A KITCHEN DEVICE, BOWL COMBINATION AND KITCHEN DEVICE**

(71) Applicant: BSH Hausgeräte GmbH, 81739 München (DE)
(72) Inventor: Brecko, Ales, 3000 Celje (SI); Hribersek, Anton, 3330 Mozirje (SI); Kovacec, Bostjan, 1420 Trbovlje (SI); Krivec, Luka, 3331 Nazarje (SI)

(57) **Abstract**

Disclosed is a lid 10 for a bowl 20 of a kitchen device 1000. The lid comprises a cover element 11 and a seal element 12 with a rigid mount portion 12a and a flexible sealing portion 12b. The mount portion 12a is rotatably attached to the cover element 11.

Further disclosed are bowl combination 100 comprising a lid 10 and a bowl 20, and a kitchen device 1000 with such bowl combination and a base 30 comprising an electric motor.

## Description

The present invention concerns a lid for a bowl of a kitchen device, a bowl combination for a kitchen device and a kitchen device with a bowl combination.

Kitchen devices for processing food may comprise a bowl and an associated lid for covering the bowl, e.g. to avoid that food being processed is expelled or ejected from the bowl. The lid and the bowl may be fixed to each other, e.g. by rotation. The connection of the lid and the bowl may be sealed by a sealing, to avoid that food can escape through a gap betreen the bowl and the lid closing it. Such sealing can be important, for example, while food is being processed in the bowl, such as by a rotating tool. In particular, lids comprising a sealing fixed by insertion into a groove and/or by 2-component injection are known in the art.

To ensure a safe inclusion of food within a respective bowl closed by the lid, the sealing has to tightly fit to the respective bowl. Thereby, however, the rotation of the lid relative to the bowl requires a sufficient force to be applied. This is, therefore, inconvenient or even impossible for people having small physical strength.

It is an object of the present invention to provide a technique allowing a tight closure of a bowl of a kitchen device but nevertheless allowing a convenient handling.

The object is solved by a lid according to claim 1, a bowl combination according to claim 8 and a kitchen device according to claim 10. Preferred embodiments are disclosed in the dependent claims, the description and the figures.

A lid according to the present invention is devised for closing a (appropriate, in particular fitting) bowl of a kitchen device. The lid comprises a cover element and a seal element. The seal element includes a rigid mount portion and a flexible sealing portion. The mount portion is rotatably attached to the cover element. The cover element is preferably configured to at least partially cover an opening of the bowl.

The cover element is thus rotatable relative to the rigid mount portion of the seal element (and vice versa). Therein, cover element and rigid mount portion may be separable or inseparable relative to each other. In use of the lid, this rotatability allows easy rotation of the cover element relative to a respective bowl covered by the cover element, while the seal element may rotate less than the cover element. Thus, the flexible sealing portion is allowed to be in tight contact to a surface of the bowl, thus providing a close sealing therewith, and nevertheless, the lid can easily be removed. In particular, when the lid is being removed, friction force between the flexible sealing portion (which is softer than the rigid mount portion) and the surface of the bowl can be higher than the friction caused by moving the cover element relative to both the bowl and the rigid mount portion.

In the following, the attributes "flexible" and "rigid" to the sealing portion and the mount portion, respectively, are sometimes omitted to simplify the notation.

Preferably, the cover element is configured to be fixed by rotation to the bowl. To this end, the cover element may comprise form fitting and/or friction fitting means (such as a bayonet joint and/or a (screw) thread, for instance), which may be configured to interact with respective counter means preferably comprised by the (respective) bowl.

The cover element may comprise an insertion funnel for filling food through the lid into the bowl when the lid is mounted thereon. According to a preferred embodiment, the cover element comprises a spout, which may comprise a tap configured to be opened or closed, respectively, according to user preference.

A bowl combination according to the present invention is devised for a kitchen device. It comprises a bowl and an associated lid according to an embodiment of the present invention, the lid configured to at least partially close the bowl (in particular, to at least partially cover an opening thereof).

Preferably, the lid is configured to be detachably fixed to the bowl, such as by rotation of the lid relative to the bowl. In cases where the cover element of the lid comprises form fitting and/or friction fitting means for fixation, as mentioned above, the bowl preferably comprises at least one corresponding counter means (such as a bayonet joint and/or a (screw) thread, for instance).

The bowl may be made of one or more materials including glass, plastics and/or metal, for example. It may be devised for heating food filled in the bowl. For example, the bowl may comprise a ground plate configured to be put onto a cooking plate or a fire.

According to a preferred embodiment, the bowl includes a tool for processing food (when this is filled in the bowl). Such tool may be detachably arranged in the bowl. In particular, the bowl may comprise a bottom element and a wall element which may be configured to be decomposably mounted together, wherein the bottom element may comprise the (possibly detachable) tool.

In these cases, the tool may be configured to process the food by rotation. In particular, it may comprise at least one rotatable knife, at least one rotatable beater and/or at least one rotatable whisk.

A kitchen device according to the present invention comprises a base with an electric motor and a bowl combination according to an embodiment of the present invention, wherein the bowl of the bowl combination includes a (preferably detachable) tool for processing food (when this is filled in the bowl). Therein, the tool is drivable by means of the electric motor. Thus, in particular, the kitchen device comprises a clutch for coupling the tool with the electric motor. Preferably, the base and the bowl are separable from each other.

According to preferred embodiments of the present invention, the kitchen device comprises an electric blender and/or an electric mill. In particular, the kitchen device may be a multifunctional food processor.

The seal element preferably is of a ring shape. The sealing portion may be (preferably firmly) attached to (thus held by) the mount portion. Therein, the attachment may be separable (such that the sealing portion is configured to be detachably attached to the mount portion, e.g. so as to ease cleaning) or permanent. In particular, the sealing portion and the mount portion may be assembled or combined by means of 2K injection.

According to preferred embodiments of the present invention, the seal element of the lid comprises a (preferably annular) protrusion which radially protrudes outwards (in particular relative to the mount portion) and which is formed by the flexible sealing portion; therein, the term "radially" refers to an axis of rotation around which the mount portion is rotatable relative to the cover element. Thereby, the flexible sealing portion may be configured to be plunged into an opening of the bowl and to abut against an inner surface of the bowl, in particular of a side wall thereof. The protrusion may, in particular, be built by at least one sealing lip.

According to advantageous embodiments of the present invention, the mount portion is (rotatably) attached to a holding portion of the cover element which is configured to extend into the bowl. In particular, at least a portion of the holding portion may be rotationally symmetric (cylindrically shaped) around an axis of rotation around which the mount portion is rotatable relative to the cover element.

The seal element may preferably comprise a projecting portion projecting, in a direction away from the cover element, beyond a gap between the cover element and the mount portion; such gap may be arranged for ensuring rotatability of the cover element and the mount portion relative to each other. The projecting portion may form a shield configured to protect an end of the gap (the end facing the interior of the bowl (when the lid is in its use position, i.e. covering the bowl)) against splashing food. Preferably, the projecting portion is configured to extend towards a bottom surface of the bowl (when the lid is covering the bowl). Additionally, the projecting portion may project beyond the gap in a direction towards said axis of rotation, thus forming a step in a lid's surface transitioning the seal element and the cover element (the surface facing an interior of the bowl when the lid is closing it).

According to advantageous embodiments of the present invention, the mount portion of the seal element is (partly or entirely) made of glass, at least one metal and/or at least one thermosetting plastic, in particular a duroplast. Additionally or alternatively, the cover element may be (partly or entirely) made of glass, at least one metal and/or at least one thermosetting plastic, in particular a duroplast. Such hard materials allow the generation of low friction when the respective components are rotated relative to each other and/or - in use of the lid - relative to the bowl.

The flexible sealing portion may be made of at least one elastomer, at least one rubber material and/or at least one polyethylene. Thereby, a particularly good sealing of an interface between the sealing portion and the respective bowl can be achieved.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: an exemplary embodiment of a lid according to the present invention;
- Fig. 2: an exemplary embodiment of a kitchen device according to the present invention;
- Fig. 3:: a portion of an exemplary embodiment of a bowl combination according to the present invention in a cross section; and
- Fig. 4:: an enlarged detail of Figure 3.

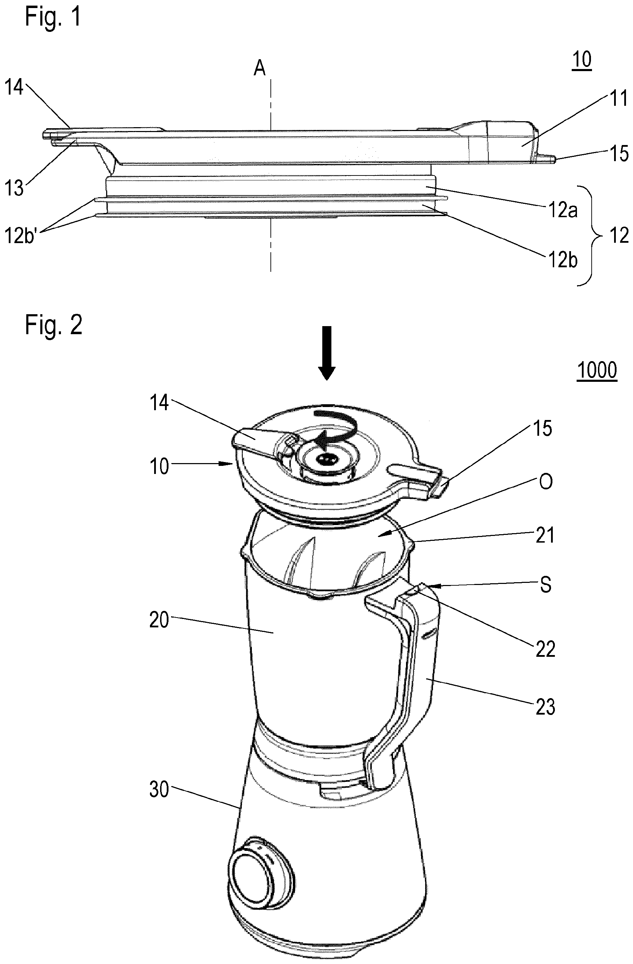

In Figure 1, a lid 10 according to an embodiment of the present invention is shown in a side view. The lid 10 comprises a cover element 11 (configured to cover an opening of a bowl) and a seal element 12. The seal element 12 includes a rigid mount portion 12a and a flexible sealing portion 12b. The mount portion 12a is rotatably attached to the cover element 11; in Figure 1, the corresponding axis of rotation A is indicated.

In the embodiment depicted, the sealing portion comprises portions 12b' forming lips which radially protrudes outwards from the mount portion 12a; as a consequence, in particular, an outer diameter of the sealing portion 12 is bigger than an outer diameter of the mount portion 12a. The sealing portion 12b is thus configured to be plunged into the opening of the bowl and to abut against an inner surface of a side wall of the bowl.

In the exemplary case shown, the lid 10 comprises a spout 13. In the depicted situation, the spout 13 is closed by a flap 14 which can be swung (not shown) relative to the cover element 11 for opening the spout 13.

The lid 10 further comprises fixation elements, in particular fixation element 15. The function thereof is described below with reference to Figure 2, which shows an electric blender as an exemplary kitchen device 1000 according to the present invention. The kitchen device 1000 comprises a base 30 and a bowl combination 100 being an exemplary embodiment of the present invention, the bowl combination including a bowl 20 and a lid 10 and being separably mounted onto the base 30.

The base 30 includes an electric motor for driving, by means of a coupling, a tool such as a rotatable knife arrangement disposed within the bowl; motor, coupling and tool are not visible in Figure 2.

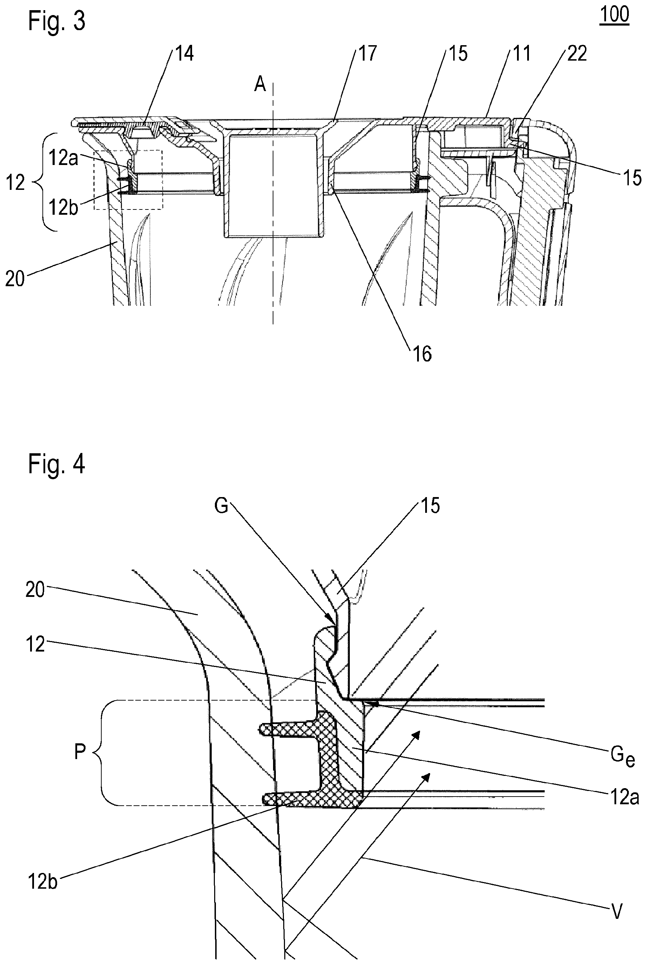

As indicated by respective arrows, in the orientation devised for use of the bowl combination 100, lid 10 is configured to be vertically lowered onto an opening O of the bowl 20, to have its seal element at least partially plunged therein and to be fixed to the bowl 20 by rotation of the cover element 11 relative to the bowl. For the fixation, the lid comprises fixation elements, of which fixation element 15 is visible in Figure 2: By rotation of the cover element 11 relative to the bowl (and around the axis A), the fixation elements are made to interact with respective fixation means 21, 22 of the bowl. In particular, fixation element 15 is configured to engage (due to the rotation) into a slit S formed in the handle 23 of the bowl, as is visible in Figure 3.

Said Figure 3 depicts a cross section of a portion of bowl combination 100 in a situation in which the lid 10 is fixed to the bowl 20, such that the cover element 11 covers an opening of the bowl 20. As can be seen in Figure 3, cover element 11 comprises an insertion funnel 16 for filling food through the lid into the bowl 20. In the situation shown, the insertion funnel 16 is closed by a detachable funnel cap 17.

Moreover, the cover element 11 comprises a cylindrically shaped holding portion 15, which mount portion 12a of the seal element 12 is rotatably mounted to and whose central axis coincides with the axis of rotation A. In the depicted situation, holding portion 15 extends into the interior of the bowl 20.

To provide the rotatability of the mount portion 12a relative to the cover element 11, an annular gap G is arranged therebetween, as is shown in Figure 4 providing a detail view of the region marked, in Figure 3, by a dashed line:
As indicated in Figure 4, in the exemplary embodiment depicted, the gap G is arranged between the holding portion 15 of the cover element 11 and the mount portion 12a of the seal element 12. Therein, the seal element 12 comprises a projecting portion P which (in the situation depicted, where the lid is covering the opening of the bowl) projects beyond the gap G into the interior of the bowl, in a direction parallel to the rotation axis/away from the cover element 11. Thereby, the projecting portion P forms an annular shield protecting the gap's end Gₑ facing the interior of the bowl 20 (when the lid is covering the bowl).

As a consequence, in use of the kitchen device, when vortices V of liquefied processed food may be generated and reflected by a side wall of the bowl (as indicated, in Figure 4, by arrows), the projecting portion obviates or at least reduces intrusion of the food into the gap. In the exemplary embodiment shown, this effect is further increased by the fact that the projecting portion P projects beyond the gap G also in a direction towards rotation axis A (see Figure 3), thus forming a step in the lid's surface facing the rotation axis in a region transitioning from the cover element 11 (in particular, its holding portion 15) to the seal element 12.

Disclosed is a lid 10 for a bowl 20 of a kitchen device 1000. The lid comprises a cover element 11 and a seal element 12 with a rigid mount portion 12a and a flexible sealing portion 12b. The mount portion 12a is rotatably attached to the cover element 11.

Further disclosed are bowl combination 100 comprising a lid 10 and a bowl 20, and a kitchen device 1000 with such bowl combination and a base 30 comprising an electric motor.

### Reference signs

- 10: lid
- 11: cover element
- 12: seal element
- 12a: mount portion of seal element 12
- 12b: sealing portion of seal element 12
- 12b': protrusion of sealing portion 12b
- 13: spout
- 14: flap
- 15: fixation element
- 16: insertion funnel
- 17: funnel cap

- 20: bowl
- 21, 22: fixation means of the bowl 20
- 23: handle

- 30: base

- 100: bowl combination

- 1000: kitchen device

- A: axis of rotation
- G: gap
- Ge: end of gap
- O: opening of the bowl 20
- P: projecting portion of seal element

## Claims

1. Lid (10) for a bowl (20) of a kitchen device (1000), the lid comprising a cover element (11) and a seal element (12), the seal element (12) comprising a rigid mount portion (12a) and a flexible sealing portion (12b),
wherein the mount portion (12a) is rotatably attached to the cover element (11).

2. Lid according to claim 1, wherein the cover element (11) comprises at least one fixation element (15) configured to interact with at least one fixation means (21, 22) of the bowl (20) when the cover element (11) is rotated relative to the bowl (20) into a fixation position, for fixing the lid (10) to the bowl (20).

3. Lid according to one of claims 1 or 2, wherein at least a portion (12b') of the sealing portion (12b) protrudes radially outwards.

4. Lid according to one of the preceding claims, wherein the seal element (12) is configured to project, in a direction away from the cover element (11), beyond a gap (G) between the cover element (11) and the mount portion (12a).

5. Lid according to one of the preceding claims, wherein the mount portion (12a) is made of glass, at least one metal and/or at least one thermosetting plastic.

6. Lid according to one of the preceding claims, wherein the sealing portion (12b) is made of at least one elastomer, at least one rubber material and/or at least one polyethylene.

7. Lid according to one of the preceding claims, wherein the cover element (11) comprises a closable spout (13).

8. Bowl combination (100) for a kitchen device (1000), the bowl combination comprising a bowl (20) and an associated lid (10) according to one of the preceding claims.

9. Bowl combination according to claim 8, wherein the bowl (20) comprises a tool for processing food in the bowl.

10. Kitchen device (1000) comprising a bowl combination (100) according to claim 9, and a base (30) with an electric motor, wherein the bowl (20) further comprises a clutch for coupling the tool to the electric motor.
